# EUROPÄISCHE PATENTSCHRIFT

(11) **EP 3 639 360 B1**
(45) Veröffentlichungstag und Bekanntmachung des Hinweises auf die Patenterteilung: **17.11.2021**
(21) Anmeldenummer: 17746074.8
(22) Anmeldetag: 27.07.2017
(51) Int. Cl.: H02M 7/483, H02H 7/122, H02H 7/125, H02H 9/06

(54) **UMRICHTERANORDNUNG MIT PHASENMODULABLEITER SOWIE VERFAHREN ZU DEREN KURZSCHLUSSSCHUTZ**
CONVERTER ARRANGEMENT HAVING PHASE MODULE ARRESTER AND METHOD FOR SHORT-CIRCUIT PROTECTION THEREOF
ENSEMBLE CONVERTISSEUR À PARAFOUDRE À MODULE DE PHASE AINSI QUE PROCÉDÉ POUR PROTÉGER LEDIT ENSEMBLE CONVERTISSEUR CONTRE DES COURT-CIRCUITS

(43) Veröffentlichungstag der Anmeldung: 22.04.2020
(73) Patentinhaber: Siemens Energy Global GmbH & Co. KG, 81739 München (DE)
(72) Erfinder: BURKHARDT, Matthias, 91052 Erlangen (DE); WESTERWELLER, Thomas, 96135 Stegaurach (DE)
(86) Internationale Anmeldenummer: PCT/EP2017/069044
(87) Internationale Veröffentlichungsnummer: WO 2019/020186

(56) Entgegenhaltungen:
- EP-A1- 3 001 552
- WO-A1-2014/114339
- WO-A1-2016/107616
- CN-A- 103 066 582
- US-A1- 2011 019 449

## Beschreibung

Die Erfindung betrifft eine Umrichteranordnung mit einer Umrichterphase, die sich zwischen einem ersten und einem zweiten Gleichspannungspol erstreckt, wobei die Umrichterphase einen Wechselspannungsanschluss sowie einen ersten Umrichterarm, der sich zwischen dem ersten Gleichspannungspol und dem Wechselspannungsanschluss erstreckt und einem zweiten Umrichterarm, der sich zwischen dem Wechselspannungsanschluss und dem zweiten Gleichspannungspol erstreckt, umfasst, wobei der erste Umrichterarm eine erste Reihenschaltung zweipoliger Schaltmodule und der zweite Umrichterarm eine zweite Reihenschaltung zweipoliger Schaltmodule umfassen, wobei jedes der Schaltmodule Leistungshalbleiterschalter und einen Energiespeicher umfasst.

Eine solche Umrichteranordnung wird meist als modularer Mehrstufenumrichter bezeichnet und ist beispielsweise aus der DE 10 2009 034 354 A1 bekannt.

Üblicherweise ist die artgemäße Umrichteranordnung im Betrieb AC-seitig, d.h. mittels des Wechselspannungsanschlusses mit einem Wechselspannungsnetz verbunden. Ist die Umrichteranordnung mehrphasig, beispielsweise dreiphasig ausgebildet, so ist sie an ein entsprechend mehrphasiges Wechselspannungsnetz angeschlossen. Die Gleichspannungspole der Umrichteranordnung sind mit einer Gleichspannungsleitung bzw. einem Gleichspannungsnetz verbunden. In einer sogenannten symmetrischen Monopol-Konfiguration kann beispielsweise der erste Gleichspannungspol auf einem positiven, der zweite Gleichspannungspol auf einem negativen elektrischen Potenzial liegen. In einer sogenannten Bipol-Konfiguration liegt der erste Gleichspannungspol beispielsweise auf einem positiven Potenzial, der zweite auf einem Erdpotenzial.

Netzfehler, beispielsweise AC-seitige Fehler, und insbesondere unsymmetrische, also einphasige Fehler, wie Kurzschlüsse durch Erdberührung, in einem mehrphasigen Wechselspannungsnetz, können zu einer Potenzialverschiebung in der Umrichter-anordnung führen. Ist die Umrichteranordnung über einen Transformator mit dem Wechselspannungsnetz verbunden, so kann die Potenzialverschiebung insbesondere bei unsymmetrischen Fehlern auftreten, die umrichterseitig des Transformators entstehen. Auch 1-polige Erdberührungen auf der Gleichspannungsseite der Umrichteranordnung können die hier beschriebene Aufladung hervorrufen. Bedingt durch eine solche Potenzialverschiebung kann es zu einer Überladung der Energiespeicher der Schaltmodule kommen. Diese Überladung kann zu einer Beschädigung oder Zerstörung der betroffenen Schaltmodule und damit zu einem Ausfall der Umrichter-anordnung führen. In einigen bekannten Umrichteranlagen wurde diesem Problem bislang mit einer Erhöhung der Anzahl der Schaltmodule in jedem Umrichterarm begegnet, was jedoch nachteilig die Kosten der Umrichteranlage erhöht.

Aus der CN 103 066 582 A ist eine Anordnung mit einem modularen Mehrstufenumrichter bekannt, bei dem zu einem Überspannungsschutz des Mehrstufenumrichters auf dessen Gleichspannungsseite zwischen den Gleichspannungspolen eine Überspannungsschutzvorrichtung mit Überspannungsableitern angeordnet ist.

In der WO 2014/114339 A1 ist ein modularer Mehrstufenumrichter beschrieben, bei dem zum Überspannungsschutz Überspannungsableiter vorgesehen sind, die zwischen einem der Gleichspannungspole und einem Umrichtersternpunkt eines wechselspannungsseitigen Umrichtertransformators geschaltet sind.

Weitere modulare Mehrstufenumrichter mit Überspannungsschutz sind aus der WO 2016/107616 A1 und der EP 3 001 552 A bekannt.

Aufgabe der Erfindung ist es, eine eingangs genannte Umrichteranordnung vorzuschlagen, die möglichst zuverlässig und kostengünstig ist.

Die Aufgabe wird bei einer artgemäßen Umrichteranordnung durch einen Phasenmodulableiter in einem Ableiterzweig parallel zu den beiden Reihenschaltungen der Schaltmodule gelöst, der für einen Überspannungsschutz der Schaltmodule der beiden Reihenschaltungen eingerichtet ist.

Vorteilhaft bietet der Phasenmodulableiter einen Überspannungsschutz für die Schaltmodule der beiden Reihenschaltungen insbesondere auch in einem Kurzschlussfall auf der AC-Seite der Umrichteranordnung, der zu potenzialverlagerten netzseitigen Strömen führt, welche nicht mehr rechtzeitig mit einem AC-seitigen Leistungsschalter geklärt werden können. Dies gilt auch für DC-Fehler bei einer symmetrischen Monopol-Anordnung der Umrichteranordnung. Der Phasenmodulableiter begrenzt eine Aufladung der Schaltmodule und schützt diese damit vor einer Überladung. Auf diese Weise kann zudem vorteilhaft auf die zuvor erwähnte Erhöhung der Anzahl der Schaltmodule verzichtet werden.

Die Umrichteranordnung kann auch dreiphasig ausgebildet sein. Dazu umfasst die Umrichteranordnung geeigneterweise drei Umrichterphasen, die parallel zueinander zwischen dem ersten und dem zweiten Gleichspannungspol angeordnet sind. Die drei Umrichterphasen können gleichartig aufgebaut sein. Eine dreiphasige Umrichteranordnung ist üblicherweise mit einem entsprechend dreiphasigen Wechselspannungsnetz verbindbar. Jede der Umrichterphasen kann über einen eigenen Phasenmodulableiter verfügen.

Erfindungsgemäß sind eine erste Arminduktivität, die im ersten Umrichterarm zwischen dem ersten Gleichspannungspol und der ersten Reihenschaltung der Schaltmodule angeordnet ist, und eine zweite Arminduktivität vorgesehen, die im zweiten Um-richterarm zwischen dem zweiten Gleichspannungspol und der zweiten Reihenschaltung der Schaltmodule angeordnet ist. Die Arminduktivitäten sind geeigneterweise Glättungsdrosseln, die für eine Glättung der DC-seitigen Ströme sorgen. Dabei erstreckt sich der Ableiterzweig zwischen einem ersten Potenzialpunkt zwischen der ersten Arminduktivität und der ersten Reihenschaltung der Schaltmodule und einem zweiten Potenzialpunkt zwischen der zweiten Arminduktivität und der zweiten Reihenschaltung der Schaltmodule. Damit ist der Phasenmodulableiter parallel zu den beiden Reihenschaltungen der Schaltmodule geschaltet. Er überbrückt jedoch nicht die Arminduktivitäten.

Vorzugsweise weist der Phasenmodulableiter einen Schutzpegel von mehr als 100 kV auf. Der Schutzpegel ist dabei die Spannung, die über den Klemmen des Phasenmodulableiters begrenzt wird (bei Nennableiterstrom). Damit kann der Phasenmodulab-leiter einen entsprechenden Schutz auch bei Hochspannungsanwendungen, wie Hochspannungsgleichstromübertragungssystemen (HGÜ) bieten.

Bevorzugt ist der Phasenmodulableiter gehäuselos ausgebildet. Auf diese Weise kann ein stationäres Energieaufnahmevermögen und eine ausreichende thermische Stabilität des Phasenmodulableiters sichergestellt werden. Der Phasenmodulableiter kann beispielsweise in einer hängenden Ausführung bereitgestellt sein.

Gemäß einer Ausführungsform der Erfindung sind die Leistungshalbleiterschalter und der Energiespeicher der Schaltmodule miteinander in einer Halbbrückenschaltung verbunden. In der Halbbrückenschaltung umfasst das Schaltmodul zwei Leistungshalbleiterschalter, die miteinander in Reihe geschaltet sind. Parallel zu den Leistungshalbleiterschaltern ist der Energiespeicher, beispielsweise in Form eines Kondensators, angeordnet. Die beiden Klemmen des Schaltmoduls sind derart mit den Leistungshalbleiterschaltern bzw. mit dem Energiespeicher verbunden, dass an den Klemmen eine Schaltmodulspannung erzeugt werden kann, die entweder der am Energiespeicher abfallenden Spannung oder einer Spannung null entspricht. Geeigneterweise ist jedem der Leistungshalbleiterschalter eine Freilaufdiode antiparallel geschaltet.

Bei einer solchen Ausgestaltung der Umrichteranordnung kann ein Fehler dazu führen, dass ein Kurzschlussstrom unkontrolliert über die Freilaufdioden der Schaltmodule fließt, was zu einer Überladung der Energiespeicher der Schaltmodule der Umrichteranordnung führen kann. In einem solchen Fall sorgt der Phasenmodulableiter besonders wirksam für einen Schutz der Schaltmodule beziehungsweise deren Energiespeicher, indem er die Spannung über der Umrichterphase begrenzt.

Bevorzugt umfasst die Umrichteranordnung einen AC-seitigen Leistungsschalter. Mittels des Phasenmodulableiters in Zusammenwirkung mit dem AC-seitigen Leistungsschalter kann insbesondere auch ein einphasiger Fehler mit Potenzialverschiebung auf der AC-Seite der Umrichteranordnung geklärt werden.

Gemäß einer Ausführungsform der Erfindung ist in jedem der Umrichterarme ein Tdc-Ableiter vorgesehen, der zwischen dem Umrichterarm und Erde geschaltet ist. Der Tdc-Ableiter ist dazu geeignet, eine Blockierspannung gegen Erde zu begrenzen, die während eines Blockierens der Leistungshalbleiterschalter der Umrichteranordnung im Fehlerfall erzeugt wird. Auf diese Weise wird eine zusätzliche Belastung der Isolierstrecken gegen Erde aufgrund der Blockierspannung vermindert oder vollständig vermieden.

Die Umrichteranordnung kann ferner einen Tac-Ableiter umfassen, der am Wechselspannungsanschluss der Umrichter-anordnung angeordnet ist.

Die Erfindung betrifft ferner ein Verfahren zum Kurzschlussschutz einer Umrichteranordnung mit einer Umrichterphase, die sich zwischen einem ersten und einem zweiten Gleichspannungspol erstreckt, wobei die Umrichterphase einen Wechselspannungsanschluss sowie einen ersten Umrichterarm, der sich zwischen dem ersten Gleichspannungspol und dem Wechselspannungsanschluss erstreckt und einem zweiten Umrichterarm, der sich zwischen dem Wechselspannungsanschluss und dem zweiten Gleichspannungspol erstreckt, umfasst, wobei der erste Umrichterarm eine erste Reihenschaltung zweipoliger Schaltmodule und der zweite Umrichterarm eine zweite Reihenschaltung zweipoliger Schaltmodule umfassen, wobei jedes der Schaltmodule Leistungshalbleiterschalter und einen Energiespeicher umfasst.

Die Aufgabe der Erfindung ist hierbei, ein solches Verfahren bereitzustellen, das zuverlässig für einen Überladungsschutz der Umrichteranordnung im Fehlerfall sorgt.

Die Aufgabe wird bei einem artgemäßen Verfahren dadurch gelöst, dass
- ein AC-seitiger oder DC-seitiger Fehler detektiert wird,
- die Leistungshalbleiterschalter der Schaltmodule blockiert werden,
- ein Fehlerstrom auf einen Phasenmodulableiter in einem Ableiterzweig parallel zu den beiden Reihenschaltungen der Schaltmodule kommutiert wird, und anschließend
- ein AC-seitig der Umrichterphase angeordneter Leistungsschalter geöffnet wird.

Mittels des erfindungsgemäßen Verfahrens ist ein Überladungsschutz für die Schaltmodule der Umrichteranordnung auch bei einer Potenzialverschiebung im Fehlerfall gegeben. Weitere Vorteile ergeben sich aus den zuvor im Zusammenhang mit der erfindungsgemäßen Umrichteranordnung beschriebenen Vorteilen.

Im Kontext des erfindungsgemäßen Verfahrens können selbstverständlich auch alle zuvor beschriebenen Merkmale der erfindungsgemäßen Umrichteranordnung, allein oder in Kombination, eingesetzt werden.

Die Erfindung wird im Folgenden anhand von Figuren 1 bis 3 weiter erläutert.
Figur 1 zeigt ein Ausführungsbeispiel einer erfindungsgemäßen Umrichteranordnung in einer schematischen Darstellung;
Figur 2 zeigt ein weiteres Ausführungsbeispiel der erfindungsgemäßen Umrichteranordnung in einer schematischen Darstellung;
Figur 3 zeigt ein Beispiel eines Schaltmoduls für eine erfindungsgemäße Umrichteranordnung in einer schematischen Darstellung.

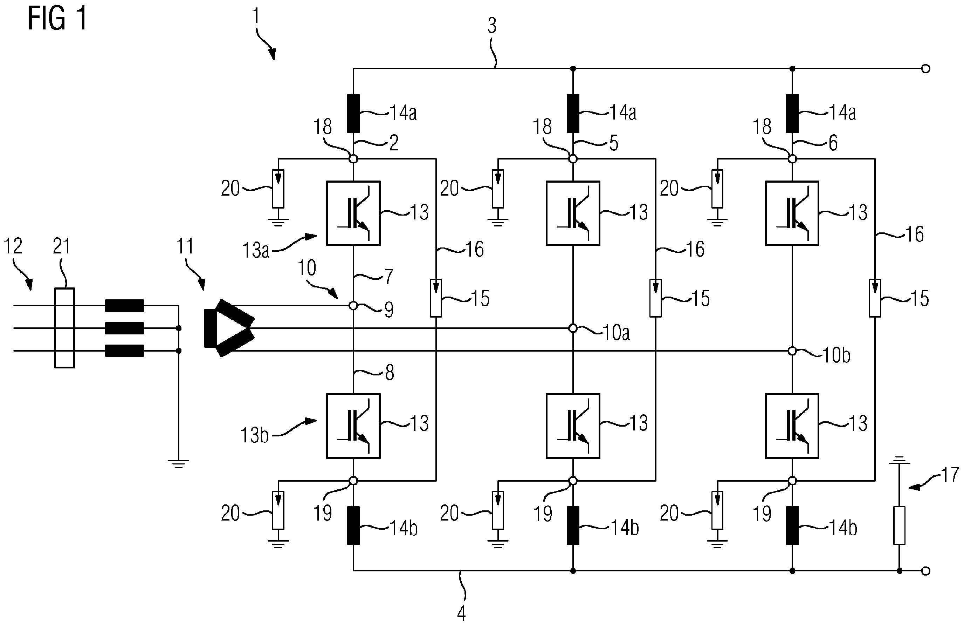

Eine dreiphasige Umrichteranordnung 1 ist in Figur 1 dargestellt. Die Umrichteranordnung 1 umfasst eine erste Umrichterphase 2, die sich zwischen einem ersten Gleichspannungspol 3 und einem zweiten Gleichspannungspol 4 erstreckt. In dem dargestellten Ausführungsbeispiel ist die Umrichteranordnung 1 Teil einer Bipol-Anlage, so dass der erste Gleichspannungspol 3 sich im Betrieb der Umrichter-anordnung auf einem positiven Hochspannungspotenzial befindet, wobei der zweite Gleichspannungspol 4 auf Erdpotenzial liegt, was in Figur 1 mittels einer Erdung 17 angedeutet ist. Ferner umfasst die Umrichteranordnung eine zweite Umrichterphase 5 und eine dritte Umrichterphase 6, die sich jeweils parallel zu der ersten Umrichterphase 2 zwischen den beiden Gleichspannungspolen 3, 4 erstrecken. In dem in Figur 1 dargestellten Ausführungsbeispiel sind die drei Umrichterphasen 2, 5 und 6 gleichartig ausgebildet. Um Wiederholungen zu vermeiden wird daher lediglich der Aufbau der ersten Umrichterphase 3 in detail beschrieben. Die erste Umrichterphase 2 weist einen ersten Umrichterarm 7 und einen zweiten Umrichterarm 8. An einem Verbindungspunkt 9 der beiden Umrichterarme 7, 8 ist ein Wechselspannungsanschluss 10 angeordnet. Mittels des Wechselspannungsaschlusses 10 ist die Umrichteranordnung 1 über einen Transformator 11 mit einem Wechselspannungsnetz 12 verbunden. Da die Umrichter-anordnung 1 dreiphasig ist, umfasst der Wechselspannungsanschluss 10 drei Anschlüsse 10, 10a, 10b zum Verbinden mit jeweils einer Phase des Wechselspannungsnetzes 12.

Der erste Umrichterarm 7 umfasst eine erste Reihenschaltung 13a zweipoliger Schaltmodule 13. In der Darstellung der Figur 1 ist dabei aus Gründen der Übersichtlichkeit nur ein Schaltmodul 13 figürlich dargestellt, das zugleich die Reihenschaltung 13a repräsentiert. Die Anzahl der Schaltmodule 13 in jedem Umrichterarm ist jedoch grundsätzlich beliebig und kann an die jeweilige Anwendung angepasst sein. In Reihe zur ersten Reihenschaltung der Schaltmodule 13 ist eine erste Arminduktivität 14a in Form einer Glättungsdrossel angeordnet. Ähnlich dazu umfasst der zweite Umrichterarm 8 eine zweite Reihenschaltung 13b der Schaltmodule 13 und eine zweite Arminduktivität 14b.

Die Umrichteranordnung 1 umfasst ferner einen Phasenmodulableiter 15. Der Phasenmodulableiter 15 ist in einem Ableiterzweig 16 angeordnet. Der Ableiterzweig 16 erstreckt sich zwischen einem ersten Potenzialpunkt 18, der zwischen der ersten Arminduktivität 14a und der ersten Reihenschaltung 13a der Schaltmodule 13 angeordnet ist, und einem zweiten Potenzialpunkt 19, der zwischen der zweiten Arminduktivität 14b und der zweiten Reihenschaltung 13b, angeordnet ist. Somit ist der Phasenmodulableiter 15 parallel zu den beiden Reihenschaltungen 13a und 13b angeordnet.

Die Umrichterarme 7, 8 weisen ferner jeweils einen Tdc-Ableiter 20 zum Begrenzen einer Blockierspannung, die beim Sperren der Leistungshalbleiter der Schaltmodule 13 entsteht. AC-seitig der Umrichterphasen 1, 5, 6 ist ein Wechselspannungsleistungsschalter (AC-Leistungsschalter) 21 angeordnet.

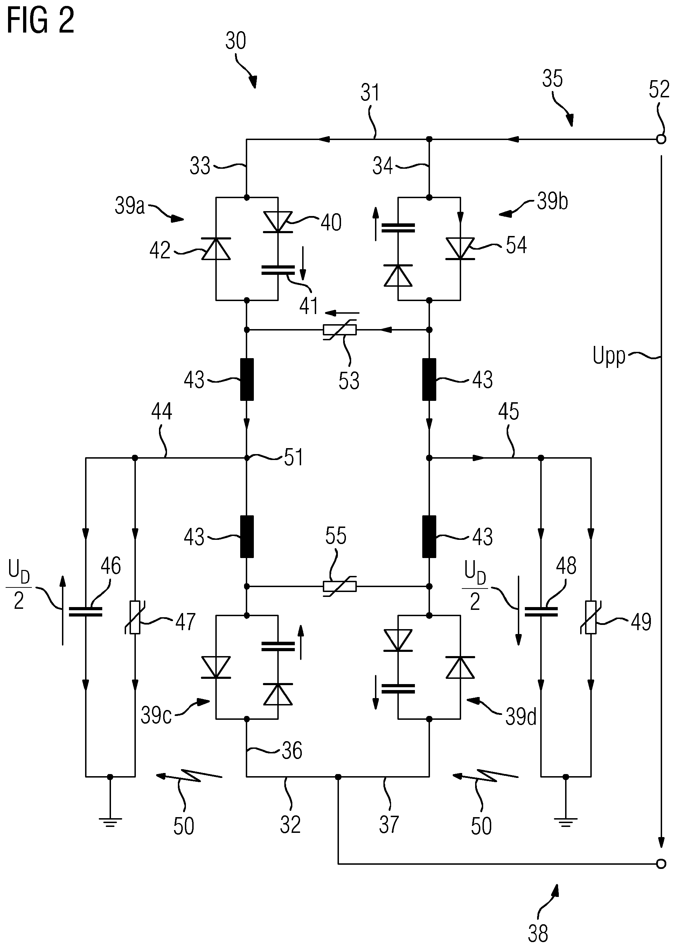

Die Funktionsweise des Phasenmodulableiters in einem Fehlerfall wird nachfolgend anhand eines weiteren Ausführungsbeispiels in Figur 2 erläutert.

Figur 2 zeigt eine Umrichteranordnung 30. In Figur 2 sind eine erste Umrichterphase 31 und eine zweite Umrichterphase 32 figürlich dargestellt. Die erste Umrichterphase 31 umfasst einen ersten Umrichterarm 33, einen zweiten Umrichterarm 34 sowie einen ersten Wechselspannungsanschluss 35. Die zweite Umrichterphase 32 umfasst einen dritten Umrichterarm 36, einen vierten Umrichterarm 37 sowie einen zweiten Wechselspannungsanschluss 38.

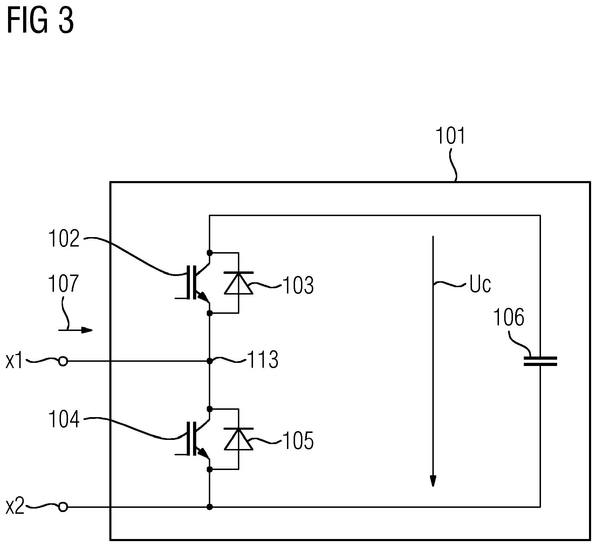

Eine erste Parallelschaltung 39a mit einer Reihenschaltung einer Diode 40 und eines Kondensators 41 und einer Freilaufdiode 42 repräsentiert eine erste Reihenschaltung von Schaltmodulen (entsprechend der Reihenschaltung 13b in Figur 1), wobei die Schaltmodule der Umrichteranordnung 30 als Halbbrückenschaltungen ausgebildet sind, so dass die Freilaufdioden (gekennzeichnet mit Bezugszeichen 103, 105 in Figur 3) einen Strompfad durch die Schaltmodule nach dem Sperren der Leistungshalbleiter der Schaltmodule ausbilden. Die Reihenschaltungen in den übrigen Umrichterarmen 34, 36 und 37 sind entsprechend durch Parallelschaltungen 39a,c-d repräsentiert. Jeder Umrichterarm 33,34,36,37 umfasst ferner jeweils eine Arminduktivität 43.

Die erste Umrichterphase 31 erstreckt sich zwischen einem ersten Gleichspannungspol 44 und einem zweiten Gleichspannungspol 45. Die Umrichteranordnung 30 ist in einer symmetrischen Monopol-Konfiguration, so dass der erste Gleichspannungspol 44 im Betrieb auf einem negativen Hochspannungspotenzial liegt, was in Figur 2 schematisch mittels einer Parallelschaltung eines Kondensators 46 und eines Ableiters 47 angedeutet ist. Zugleich liegt der zweite Gleichspannungspol 45 auf einem positiven Hochspannungspotenzial, was in Figur 2 schematisch mittels einer Parallelschaltung eines weiteren Kondensators 48 und eines Ableiters 49 angedeutet ist. Zwischen den beiden Gleichspannungspolen fällt eine Gleichspannung UD ab. Zwischen dem ersten und dem zweiten Wechselspannungsanschluss 35, 38 fällt eine Spannung Upp (Phase-Phase) ab.

Anhand der Figur 2 soll nun ein Beispiel eines AC-seitigen unsymmetrischen Fehlers erläutert werden, bei dem der zweite Wechselspannungsanschluss 38 mit Erde kurzgeschlossen ist, was in Figur 2 mittels Kurzschlusszeichen 50 angedeutet ist (beispielsweise aufgrund einer Erdberührung im angeschlossenen Wechselspannungsnetz). Üblicherweise ist die Umrichteranordnung 30 über einen Netztransformator mit dem Wechselspannungsnetz verbunden. In dieser Konstellation wird hier der Fall eines bezüglich des Netztransformators umrichterseitigen Fehlers betrachtet.

In Stromzweige eingezeichnete Pfeile signalisieren in Figur 2 die Stromrichtung in einem solchen Kurzschlussfall. Aufgrund des Kurzschlusses entsteht ein Spannungsunterschied ΔU zwischen einem Potenzialpunkt am ersten Gleichspannungspol 44 und einem Potenzialpunkt 52 am ersten Wechselspannungsanschluss, wobei ΔU = Upp + UD/2. Dieser Spannungsunterschied kann zu einer Überlastung des Kondensators 41 führen, der, wie bereits erwähnt, die Energiespeicher der Schaltmodule repräsentiert. Diese Überlastung wird jedoch durch einen Phasenmodulableiter 53 vermieden, der die Spannung über dem Kondensator 41 begrenzt. Im zweiten Umrichterarm 34 fließt in der in Figur 2 dargestellten Situation der Strom über die Freilaufdioden der Schaltmodule (repräsentiert durch eine Freilaufdiode 54). Ein weiterer Phasenmodulableiter 55 erfüllt die entsprechende Funktion für die zweite Umrichterphase 32.

In einem unsymmetrischen Kurzschlussfall auf der AC-Seite der Umrichteranordnung wird demnach wie folgt vorgegangen: Zunächst werden die Leistungshalbleiter der Schaltmodule gesperrt. Anschließend kommutiert der Kurzschlussstrom zumindest teilweise auf den Phasenmodulableiter. Anschließend wird ein AC-Leistungsschalter geöffnet.

Figur 3 zeigt im Einzelnen ein Schaltmodul in Form einer Halbbrückenschaltung 101, das als Schaltmodul 13 in der Umrichteranordnung 1 oder auch in der Umrichteranordnung 30 einsetzbar ist. Die Halbbrückenschaltung 101 weist zwei Anschlüsse X1 und X2 auf. Der Anschluss X1 kann beispielsweise die Halbbrückenschaltung 101 mit dem Anschluss X2 einer weiteren Halbbrückenschaltung verbinden, so dass eine Reihenschaltung der Submodule gebildet wird.

Die Halbbrückenschaltung 101 umfasst einen ersten Halbleiterschalter 102 in Form eines Bipolartransistors mit isolierter Gate-Elektrode (IGBT), dem eine Freilaufdiode 103 antiparallel geschaltet ist. Ferner umfasst die Halbbrückenschaltung 101 einen zweiten Halbleiterschalter 104 in Form eines IGBT, dem eine Freilaufdiode 105 antiparallel geschaltet ist. Die Durchlassrichtung der beiden Halbleiterschalter 102 und 104 ist gleichgerichtet. Der erste Anschluss X1 ist an einem Potenzialpunkt 113 zwischen den beiden Halbleiterschaltern 102 und 104 angeordnet. Der zweite Anschluss X2 ist mit dem Emitter des zweiten Halbleiterschalters 104 verbunden.

Parallel zu den beiden Halbleiterschaltern 102, 104 ist ein Energiespeicher in Form eines Leistungskondensators 106 angeordnet. Durch eine geeignete Ansteuerung der Halbleiterschalter 102, 104 kann, bei einer durch einen Pfeil 107 angedeuteten Betriebsstromrichtung, der Kondensator 106 zugeschaltet oder überbrückt werden, so dass an den Anschlüssen X1, X2 entweder die am Kondensator 106 abfallende Spannung Uc oder eine Spannung null abfällt.

## Patentansprüche

1. Umrichteranordnung (1) mit einer Umrichterphase (2), die sich zwischen einem ersten und einem zweiten Gleichspannungspol (3, 4) erstreckt, wobei die Umrichterphase (2) einen Wechselspannungsanschluss (10) sowie einen ersten Umrichterarm (7), der sich zwischen dem ersten Gleichspannungspol (3) und dem Wechselspannungsanschluss (10) erstreckt und einem zweiten Umrichterarm (8), der sich zwischen dem Wechselspannungsanschluss (10) und dem zweiten Gleichspannungspol (4) erstreckt, umfasst, wobei der erste Umrichterarm (7) eine erste Reihenschaltung (13a) zweipoliger Schaltmodule (13) und der zweite Umrichterarm (8) eine zweite Reihenschaltung (13b) zweipoliger Schaltmodule (13) umfassen, wobei jedes der Schaltmodule (13) Leistungshalbleiterschalter und einen Energiespeicher umfasst, wobei die Umrichterphase einen Phasenmodulableiter (15) in einem Ableiterzweig (16) parallel zu den beiden Reihenschaltungen (13a,b) der Schaltmodule (13) umfasst , der für einen Überspannungsschutz der Schaltmodule (13) der beiden Reihenschaltungen (13a,b) eingerichtet ist, wobei
eine erste Arminduktivität (14a) vorgesehen ist, die im ersten Umrichterarm (7) zwischen dem ersten Gleichspannungspol (3) und der ersten Reihenschaltung (13a) der Schaltmodule (13) angeordnet ist, und ferner eine zweite Arminduktivität (14b) vorgesehen ist, die im zweiten Umrichterarm (8) zwischen dem zweiten Gleichspannungspol (4) und der zweiten Reihenschaltung (13b) der Schaltmodule (13) angeordnet ist, **dadurch gekennzeichnet, dass** sich der Ableiterzweig (16) zwischen einem ersten Potenzialpunkt (18) zwischen der ersten Arminduktivität (14a) und der ersten Reihenschaltung (13a) der Schaltmodule (13) und einem zweiten Potenzialpunkt (19) zwischen der zweiten Arminduktivität (14b) und der zweiten Reihenschaltung (13b) der Schaltmodule (13) erstreckt.

2. Umrichteranordnung (1) nach Anspruch 1, wobei der Phasenmodulableiter (15) einen Schutzpegel von mehr als 100 kV aufweist.

3. Umrichteranordnung (1) nach einem der vorangehenden Ansprüche, wobei der Phasenmodulableiter (15) gehäuselos ausgebildet ist.

4. Umrichteranordnung (1) nach einem der vorangehenden Ansprüche, wobei die Leistungshalbleiterschalter (102, 104) und der Energiespeicher (106) der Schaltmodule (13) miteinander in einer Halbbrückenschaltung verbunden sind.

5. Umrichteranordnung (1) nach einem der vorangehenden Ansprüche, wobei die Umrichteranordnung (1) einen AC-seitigen Leistungsschalter (21) umfasst.

6. Umrichteranordnung (1) nach einem der vorangehenden Ansprüche, wobei in jedem der Umrichterarme (7, 8) ein Tdc-Ableiter (20) vorgesehen ist, der zwischen dem Umrichterarm (7, 8) und Erde geschaltet ist.

7. Verfahren zum Kurzschlussschutz einer Umrichteranordnung (1) mit einer Umrichterphase (2), die sich zwischen einem ersten und einem zweiten Gleichspannungspol (3, 4) erstreckt, wobei die Umrichterphase (2) einen Wechselspannungsanschluss (10) sowie einen ersten Umrichterarm (7), der sich zwischen dem ersten Gleichspannungspol (3) und dem Wechselspannungsanschluss (10) erstreckt und einem zweiten Umrichterarm (8), der sich zwischen dem Wechselspannungsanschluss (10) und dem zweiten Gleichspannungspol (4) erstreckt, umfasst, wobei der erste Umrichterarm (7) eine erste Reihenschaltung (13a) zweipoliger Schaltmodule (13) und der zweite Umrichterarm (8) eine zweite Reihenschaltung (13b) zweipoliger Schaltmodule (13) umfassen, wobei jedes der Schaltmodule (13) Leistungshalbleiterschalter und einen Energiespeicher umfasst, sowie mit einem Phasenmodulableiter (15) in einem Ableiterzweig (16) parallel zu den beiden Reihenschaltungen (13a,b) der Schaltmodule (13), wobei eine erste Arminduktivität (14a) vorgesehen ist, die im ersten Umrichterarm (7) zwischen dem ersten Gleichspannungspol (3) und der ersten Reihenschaltung (13a) der Schaltmodule (13) angeordnet ist, und ferner eine zweite Arminduktivität (14b) vorgesehen ist, die im zweiten Umrichterarm (8) zwischen dem zweiten Gleichspannungspol (4) und der zweiten Reihenschaltung (13b) der Schaltmodule (13) angeordnet ist, **dadurch gekennzeichnet, dass** sich der Ableiterzweig (16) zwischen einem ersten Potenzialpunkt (18) zwischen der ersten Arminduktivität (14a) und der ersten Reihenschaltung (13a) der Schaltmodule (13) und einem zweiten Potenzialpunkt (19) zwischen der zweiten Arminduktivität (14b) und der zweiten Reihenschaltung (13b) der Schaltmodule (13) erstreckt, bei dem
- ein AC-seitiger oder DC-seitiger Fehler detektiert wird,
- die Leistungshalbleiterschalter der Schaltmodule (13) blockiert werden,
- ein Fehlerstrom auf den Phasenmodulableiter (15) kommutiert wird, und anschließend
- ein AC-seitig der Umrichterphase angeordneter Leistungsschalter (21) geöffnet wird.

## Claims

1. Converter arrangement (1) having a converter phase (2) which extends between a first and a second DC voltage pole (3, 4), wherein the converter phase (2) comprises an AC voltage terminal (10) and a first converter arm (7), which extends between the first DC voltage pole (3) and the AC voltage terminal (10), and a second converter arm (8), which extends between the AC voltage terminal (10) and the second DC voltage pole (4), wherein the first converter arm (7) comprises a first series circuit (13a) of two-pole switching modules (13), and the second converter arm (8) comprises a second series circuit (13b) of two-pole switching modules (13), wherein each of the switching modules (13) comprises power semiconductor switches and an energy store,
wherein the converter phase comprises a phase module arrester (15) in an arrester branch (16) arranged in parallel with the two series circuits (13a,b) of the switching modules (13), which is configured for the overvoltage protection of the switching modules (13) of the two series circuits (13a,b), wherein a first arm inductance (14a) is provided, which is arranged in the first converter arm (7) between the first DC voltage pole (3) and the first series circuit (13a) of switching modules (13), and a second arm inductance (14b) is further provided, which is arranged in the second converter arm (8) between the second DC voltage pole (4) and the second series circuit (13b) of switching modules (13),
**characterized in that**
the arrester branch (16) extends between a first potential point (18) between the first arm inductance (14a) and the first series circuit (13a) of switching modules (13) and a second potential point (19) between the second arm inductance (14b) and the second series circuit (13b) of switching modules (13).

2. Converter arrangement (1) according to Claim 1, wherein the phase module arrester (15) assumes a protective level in excess of 100 kV.

3. Converter arrangement (1) according to one of the preceding claims, wherein the phase module arrester (15) is configured without a housing.

4. Converter arrangement (1) according to one of the preceding claims, wherein the power semiconductor switches (102, 104) and the energy store (106) of the switching modules (13) are mutually connected in a half-bridge circuit.

5. Converter arrangement (1) according to one of the preceding claims, wherein the converter arrangement (1) comprises an AC-side power circuit-breaker (21).

6. Converter arrangement (1) according to one of the preceding claims, wherein a TDC-arrester (20) is provided in each of the converter arms (7, 8), which is connected in circuit between the converter arm (7, 8) and earth.

7. Method for the short-circuit protection of a converter arrangement (1) having a converter phase (2) which extends between a first and a second DC voltage pole (3, 4), wherein the converter phase (2) comprises an AC voltage terminal (10) and a first converter arm (7), which extends between the first DC voltage pole (3) and the AC voltage terminal (10), and a second converter arm (8), which extends between the AC voltage terminal (10) and the second DC voltage pole (4), wherein the first converter arm (7) comprises a first series circuit (13a) of two-pole switching modules (13), and the second converter arm (8) comprises a second series circuit (13b) of two-pole switching modules (13), wherein each of the switching modules (13) comprises power semiconductor switches and an energy store, and having a phase module arrester (15) in an arrester branch (16) arranged in parallel with the two series circuits (13a,b) of the switching modules (13), wherein a first arm inductance (14a) is provided, which is arranged in the first converter arm (7) between the first DC voltage pole (3) and the first series circuit (13a) of switching modules (13), and a second arm inductance (14b) is further provided, which is arranged in the second converter arm (8) between the second DC voltage pole (4) and the second series circuit (13b) of switching modules (13),
**characterized in that** the arrester branch (16) extends between a first potential point (18) between the first arm inductance (14a) and the first series circuit (13a) of switching modules (13) and a second potential point (19) between the second arm inductance (14b) and the second series circuit (13b) of switching modules (13),
wherein
- an AC-side or a DC-side fault is detected,
- the power semiconductor switches of the switching modules (13) assume a blocking state,
- a fault current on the phase module arrester (15) is commutated and, thereafter
- a power circuit-breaker (21) arranged on the AC side of the converter phase is opened.

## Revendications

1. Ensemble (1) convertisseur comprenant une phase (2) de convertisseur, qui s'étend entre un premier pôle et un deuxième pôle (3, 4) de tension continue, dans lequel la phase (2) de convertisseur comprend une borne (10) de tension alternative ainsi qu'un premier bras (7) de convertisseur, qui s'étend entre le premier pôle (3) de tension continue et la borne (10) de tension alternative, et un deuxième bras (8) de convertisseur, qui s'étend entre la borne (10) de tension alternative et le deuxième pôle (4) de tension continue, dans lequel le premier bras (7) de convertisseur comprend un premier circuit (13a) série de modules (13) de coupure bipolaires et le deuxième bras (8) de convertisseur a un deuxième circuit (13b) série de modules (13) de coupure bipolaires, dans lequel chacun des modules (13) de coupure comprend un interrupteur à semiconducteur de puissance et un accumulateur d'énergie,
dans lequel la phase (2) convertisseur comprend un parafoudre (15) de module de phase dans une branche (16) de parafoudre en parallèle aux deux circuits (13a, b) série des modules (13) de coupure, qui est conçue pour une protection vis-à-vis de la surtension des modules (13) de coupure des deux circuits (13a, b) série, dans lequel
il est prévu une première inductance (14a) de branche, qui est montée dans le premier bras (7) du convertisseur entre le premier pôle (3) de tension continue et le premier circuit (13a) série des modules (13) de coupure, et en outre il est prévu une deuxième inductance (14b) de branche, qui est montée dans le deuxième bras (8) du convertisseur entre le deuxième pôle (4) de tension continue et le deuxième circuit (13b) série des modules (13) de coupure,
**caractérisé en ce que**
la branche (16) de parafoudre s'étend entre un premier point (18) de potentiel entre la première inductance (14a) de bras et le premier circuit (13a) série des modules (13) de coupure et un deuxième point (19) de potentiel entre la deuxième inductance (14b) de bras et le deuxième circuit (13b) série des modules (13) de coupure.

2. Ensemble (1) convertisseur suivant la revendication 1, dans lequel le parafoudre (15) de module de phase a un niveau de protection de plus de 100 kV.

3. Ensemble (1) convertisseur suivant l'une des revendications précédentes, dans lequel le parafoudre (15) de module de phase est constitué sans boîtier.

4. Ensemble (1) convertisseur suivant l'une des revendications précédentes, dans lequel les interrupteurs (102, 104) à semiconducteur de puissance et l'accumulateur (106) d'énergie des modules (13) de coupure sont connectés entre eux suivant un circuit en demi pont.

5. Ensemble (1) convertisseur suivant l'une des revendications précédentes, dans lequel l'ensemble (1) convertisseur comprend un interrupteur (21) de puissance du côté du courant alternatif.

6. Ensemble (1) convertisseur suivant l'une des revendications précédentes, dans lequel dans chacun des bras (7, 8) du convertisseur est prévu un parafoudre (20) Tdc qui est monté entre le bras (7, 8) du convertisseur et la terre.

7. Procédé de protection vis-à-vis d'un court-circuit d'un ensemble (1) convertisseur, comprenant une phase (2) de convertisseur, qui s'étend entre un premier pôle et un deuxième pôle (3, 4) de tension continue, dans lequel la phase (2) de convertisseur comprend une borne (10) de tension alternative ainsi qu'un premier bras (7) de convertisseur, qui s'étend entre le premier pôle (3) de tension continue et la borne (10) de tension alternative, et un deuxième bras (8) de convertisseur, qui s'étend entre la borne (10) de tension alternative et le deuxième pôle (4) de tension continue, dans lequel le premier bras (7) de convertisseur comprend un premier circuit (13a) série de modules (13) de coupure bipolaires et le deuxième bras (8) de convertisseur un deuxième circuit (13b) série de modules (13) de coupure bipolaires, dans lequel chacun des modules (13) de coupure comprend un interrupteur à semiconducteur de puissance et un accumulateur d'énergie,
dans lequel la phase (2) convertisseur comprend un parafoudre (15) de module de phase dans une branche (16) de parafoudre en parallèle aux deux circuits (13a, b) série des modules (13) de coupure, qui est conçue pour une protection vis-à-vis de la surtension des modules (13) de coupure des deux circuits (13a, b) série, dans lequel
il est prévu une première inductance (14a) de branche, qui est montée dans le premier bras (7) du convertisseur entre le premier pôle (3) de tension continue et le premier circuit (13a) série des modules (13) de coupure, et en outre il est prévu une deuxième inductance (14b) de branche, qui est montée dans le deuxième bras (8) du convertisseur entre le deuxième pôle (4) de tension continue et le deuxième circuit (13b) série des modules (13) de coupure,
**caractérisé en ce que**
la branche (16) de parafoudre s'étend entre un premier point (18) de potentiel entre la première inductance (14a) de bras et le premier circuit (13a) série des modules (13) de coupure et un deuxième point (19) de potentiel entre la deuxième inductance (14b) de bras et le deuxième circuit (13b) série des modules (13) de coupure,
dans lequel
- on détecte un défaut du côté du courant alternatif ou du côté du courant continu,
- on bloque les interrupteurs à semiconducteur de puissance des modules (13) de coupure,
- on commute un courant de défaut sur le parafoudre (15) de module de phase et ensuite
- on ouvre un interrupteur (21) de puissance monté du côté du courant alternatif de la phase du convertisseur.
